# EUROPÄISCHE PATENTSCHRIFT

(11) **EP 1 320 500 B1**
(45) Veröffentlichungstag und Bekanntmachung des Hinweises auf die Patenterteilung: **31.08.2005**
(21) Anmeldenummer: 01982102.4
(22) Anmeldetag: 04.09.2001
(51) Int. Cl.: B65G 23/06, B65G 23/22

(54) **ANTRIEBSEINHEIT FÜR EIN ENDLOSES FÖRDERMITTEL EINES TRANSFERSYSTEMS**
DRIVE UNIT FOR A CONTINUOUS MEANS OF CONVEYANCE IN A CONTINUOUS TRANSFER SYSTEM
UNITE D'ENTRAINEMENT POUR UN MOYEN DE TRANSPORT SANS FIN D'UN SYSTEME DE TRANSFERT

(30) Priorität: 15.09.2000 DE 10045739
(43) Veröffentlichungstag der Anmeldung: 25.06.2003
(73) Patentinhaber: ROBERT BOSCH GMBH, 70442 Stuttgart (DE)
(72) Erfinder: HAUG, Heinz, 71701 Schwieberdingen (DE); SCHNEIDER, Ralph, 71336 Waiblingen (DE); SCHOLPP, Claus, 71706 Markgroeningen (DE)
(86) Internationale Anmeldenummer: PCT/DE2001/003376
(87) Internationale Veröffentlichungsnummer: WO 2002/022472

(56) Entgegenhaltungen:
- DE-A- 1 756 355
- DE-U- 29 521 586
- DE-U- 29 915 798
- US-A- 4 437 564
- US-A- 5 105 936

## Beschreibung

### Stand der Technik

Die Erfindung betrifft eine Antriebseinheit für ein endloses Fördermittel eines Transfersystems. Aus der DE 195 32 391 C2 ist bereits eine Antriebseinheit bekannt, deren Gehäuse aus einem oberen Gehäuseteil und einem unteren Gehäuseteil besteht. Am oberen Gehäuseteil sind über eine Deckplatte miteinander verbundene Schenkel ausgebildet, die die Lagerung eines Antriebsrades aufnehmen. Die Schenkel sind in entsprechende Ausschnitte des unteren Gehäuseteils einführbar, wobei das obere Gehäuseteil mit dem unteren Gehäuseteil verschraubt wird. Die Auslegung der bekannten Antriebseinheit ist darauf gerichtet, diese sowohl am Ende einer Förderstrecke als auch integriert in einer Förderstrecke anordnen zu können. Es ist bei der bekannten Antriebseinheit zwar möglich, das Antriebsrad von oben her in die Strecke beziehungsweise das untere Gehäuseteil der Antriebseinheit einsetzen zu können, jedoch muß zu Wartungszwecken stets das obere Gehäuseteil samt Antriebsrad aus dem unteren Gehäuseteil entfernt werden.

### Vorteile der Erfindung

Die erfindungsgemäße Antriebseinheit für ein endloses Fördermittel eines Transfersystems mit den Merkmalen des Anspruchs 1 hat den Vorteil, daß sie eine besonders einfache Montage und Demontage des Antriebsrads ermöglicht und gleichzeitig bei Wartungsarbeiten das Antriebsrad nicht aus dem Gehäuse entfernt werden muß. Ferner ist es infolge seiner Bauweise sowohl als reine Antriebs- und Umlenkstation, als auch als Antriebsstation mit einem daran angeflanschten Kettenkastengehäuse geeignet. Erfindungsgemäß werden diese Aufgaben durch eine an der oberen und unteren Stirnseite offene Bauweise des Gehäuseteils erzielt, die mit entsprechenden Bauteilen verschlossen werden können.

Weitere vorteilhafte Weiterbildungen der erfindungsgemäßen Antriebseinheit für ein endloses Fördermittel eines Transfersystems sind in den Unteransprüchen angegeben.

### Zeichnung

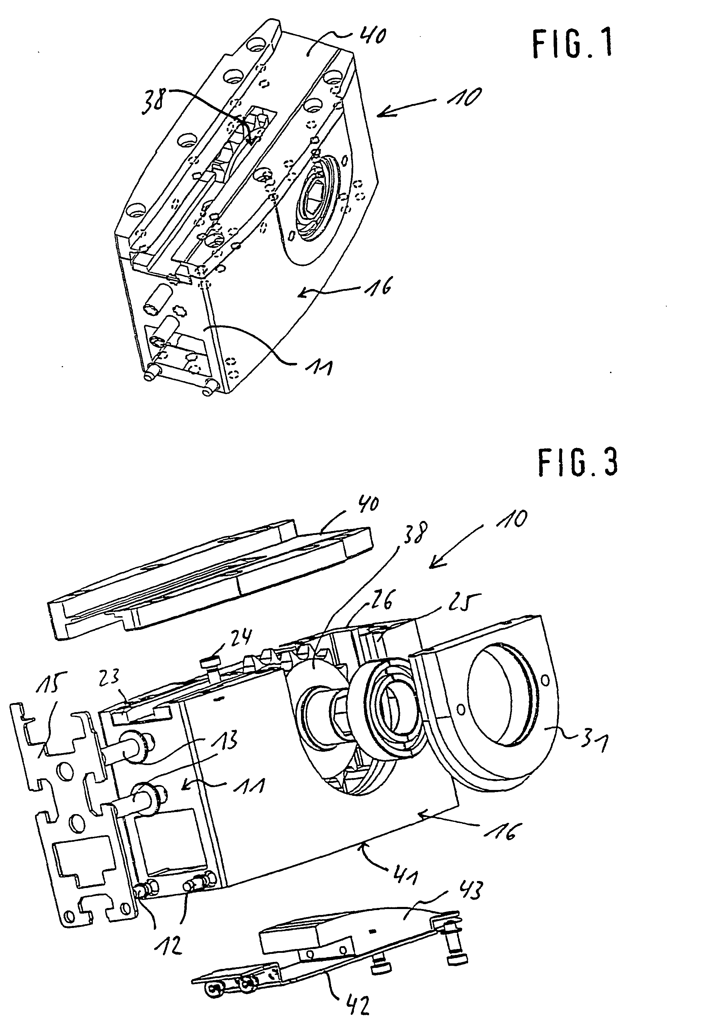

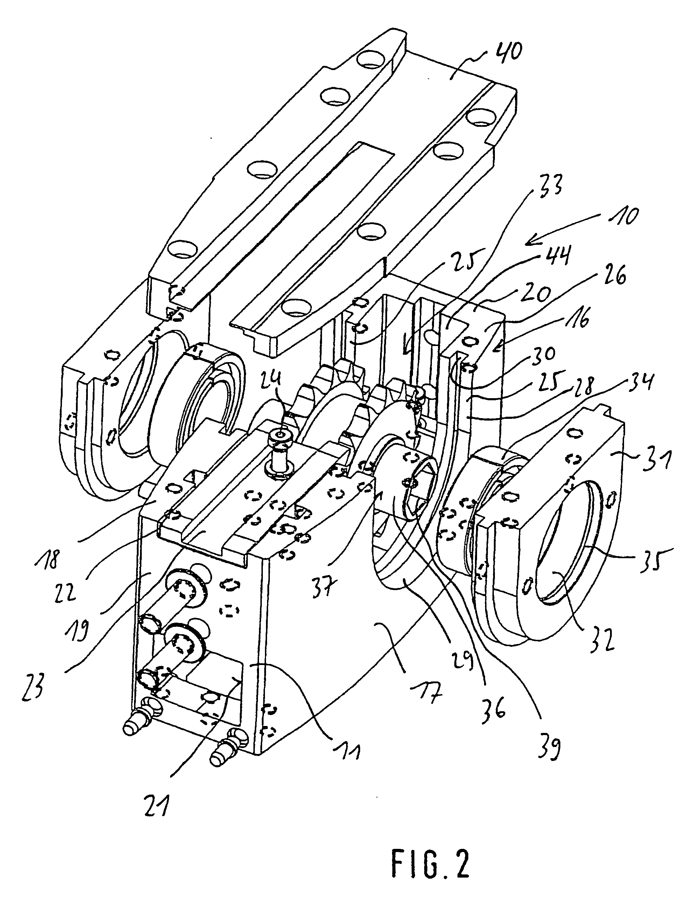

Ein Ausführungsbeispiel der Erfindung ist in der Zeichnung dargestellt und wird nachfolgend näher erläutert. Es zeigen: Figur 1 eine erfindungsgemäße Antriebseinheit für ein endloses Fördermittel eines Transfersystems in perspektivischer Ansicht und Figuren 2 und 3 die Einzelteile der Antriebseinheit nach Figur 1 ebenfalls in perspektivischer Ansicht.

### Beschreibung des Ausführungsbeispiels

Die in den Figuren dargestellte Antriebseinheit 10 für ein endloses Fördermittel, insbesondere eine Förderkette, ist Bestandteil einer Förderstrecke eines Transfersystems. Dazu ist die Antriebseinheit 10 mit einer vorderen Stirnfläche 11 und Verbindungselementen 12, 13, gegebenenfalls unter Zwischenlage einer Anschlagplatte 15 (Figur 3) mit einem Streckenprofil verbindbar.

Die Antriebseinheit 10 hat ein blockförmiges, einstückiges Gehäuseteil 16 mit auf der Außenseite des Gehäuseteils 16 gewölbten Seitenwänden 17, 18, einer vorderen Gehäusewand 19 und einer hinteren Gehäusewand 20. In der vorderen Gehäusewand 19 ist ein Durchbruch 21 zum Durchführen des Fördermittels in die Rückführebene des Streckenprofils ausgebildet. Auf der Oberseite 26 des Gehäuseteils 16 ist auf der der vorderen Gehäusewand 19 zugewandten Seite eine Aussparung 22 ausgebildet, in der ein aus Kunststoff bestehender Kettenführungskörper 23 angeordnet ist, welcher mittels einer Schraube 24 mit dem Gehäuseteil 16 verbindbar ist.

In den beiden Seitenwänden 17, 18 des Gehäuseteils 16 ist jeweils eine Ausnehmung 25 ausgebildet, die beide zueinander fluchten. Die Ausnehmungen 25, welche von der Oberseite 26 des Gehäuseteils 16 ausgehen, und die zur hinteren Gehäusewand 20 einen geringeren Abstand aufweisen als zur vorderen Gehäusewand 19, weisen auf der der Oberseite 26 zugewandten Seite jeweils einen geradlinigen Abschnitt 28 auf, an den sich ein halbkreisförmiger Abschnitt 29 anschließt. Mittig in jeder Ausnehmung 25 ist ferner eine Nut 30 ausgebildet. In diese Nut 30 ist eine Lagerplatte 31 formschlüssig einsetzbar. Die Lagerplatte 31 hat eine abgestufte Durchgangsbohrung 32, so daß von dem Innenraum 33 des Gehäuseteils 16 her ein Lagerkörper 34 und ein Spannring in die Durchgangsbohrung 32 einpreß- oder einsetzbar ist, derart, daß der Bund 35 der Durchgangsbohrung 32 einen Anschlag für den Lagerkörper 34 bildet.

Die Lagerkörper 34 dienen der Aufnahme von Achsstummeln 36 einer Antriebswelle 37, auf der ein Antriebsrad 38 drehfest montiert ist. Die Antriebswelle 37 hat einen Sechskant 39, der mit einem Lagerzapfen eines nicht dargestellten Antriebsmotor formschlüssig zusammenwirkt. Um ein verdrehsicheres Einlegen von Schrauben/Muttern zwischen dem Antriebsrad 38 und der hinteren Gehäusewand 20 zu ermöglichen, ist in der hinteren Gehäusewand 20 eine Aussparung 44 ausgebildet.

Die Oberseite 26 des Gehäuseteils 16 ist mittels eines bevorzugt aus Kunststoff bestehenden Abschlußdeckels 40 verschließbar. Der Abschlußdeckel 40 hält die Lagerplatten 31 in ihren Ausnehmungen 25 fest. Wenn es erforderlich ist, mit der Antriebseinheit 10 einen sogenannten Kettenspanner zu kombinieren, so kann dessen Gehäuse einfach an die Unterseite 41 des Gehäuseteils 16 montiert werden. Das Herausführen des Fördermittels aus dem Gehäuseteil 16 in Richtung des Kettenkastens wird dadurch ermöglicht, daß der Innenraum 33 des Gehäuseteils 16 in Richtung der Unterseite 41 hin offen ist. Ist hingegen keine zusätzliche Spanneinrichtung erforderlich, so wird die Unterseite 41 des Gehäuseteils 16 mit einem in der Figur 3 dargestellten unteren Abschlußdeckel 42 verschlossen. Dieser Abschlußdeckel 42 hat einen aus Kunststoff bestehenden Führungskörper 43 für das Fördermittel, der das Fördermittel in Richtung des Durchbruchs 21 an der vorderen Gehäusewand 19 führt und umlenkt.

Die soweit beschriebene Antriebseinheit 10 ermöglicht durch die an der Oberseite 26 und Unterseite 41 offene Bauweise des Gehäuseteils 16 zum einen eine einfache Montage der Lagerplatten 31 mit Lagerkörpern 34 und Antriebswelle 37 samt Antriebsrad 38, welche eine vormontierbare Baugruppe darstellen, und zum anderen einen universellen Einsatz der Antriebseinheit 10 mit oder ohne einem Kettenkasten. Ein Zugang zum Innenraum 33 des Gehäuseteils 16 ist möglich durch eine Demontage des oberen Abschlußdeckels 40, ohne daß weitere Antriebsteile aus dem Gehäuseteil 16 beziehungsweise der Antriebseinheit 10 entfernt werden müssen.

## Patentansprüche

1. Antriebseinheit (10) für ein endloses Fördermittel eines Transfersystems, umfassend:
- ein Antriebsrad (38) mit einer Antriebswelle (36),
- ein Gehäuseteil (16), welches zwei Seitenwände (17, 18), eine vordere Wand (19) mit einem Durchbruch (21) für das Fördermittel und eine hintere Wand (20) aufweist, die einstückig miteinander verbunden sind und einen Innenraum (33) zur Aufnahme des Antriebsrades (38) umgrenzen,
wobei die obere Stirnseite (26) und die untere Stirnseite (41) des Gehäuseteils (16) offen ausgebildet sind und
wobei jede Seitenwand (17, 18) eine von der oberen Stirnseite (26) ausgehende Ausnehmung (25) aufweist,
- zwei Lagerplatten (31), welche die Antriebswelle (36) des Antriebsrades (38) aufnehmen, wobei jede der Lagerplatten (31) in die Ausnehmung (25) jeweils einer Seitenwand (17, 18) aus Richtung der offenen, oberen Stirnseite (26) des Gehäuseteils (16) einführbar ist, und
- einen Abschlussdeckel (40), der nach seiner Demontage einen Zugang zum Innenraum (33) des Gehäuseteils (16) ermöglicht,
**dadurch gekennzeichnet, dass** der Abschlussdeckel (40) von den Lagerplatten (31) gesondert ausgebildet ist, die Ausnehmungen (25) verschließt und so die Lagerplatten (31) in den Ausnehmungen (25) festhält.

2. Antriebseinheit nach Anspruch 1, **dadurch gekennzeichnet, daß** die Ausnehmungen (25) bzw. das Antriebsrad (38) zur hinteren Wand (20) hin versetzt angeordnet sind.

3. Antriebseinheit nach einem der Ansprüche 1 oder 2, **dadurch gekennzeichnet, daß** die Ausnehmungen (25) jeweils eine Nut (30) zur formschlüssigen Aufnahme der Lagerplatten (31) aufweisen.

4. Antriebseinheit nach einem der Ansprüche 1 bis 3, **dadurch gekennzeichnet, daß** hintere Wand (20) eine nutförmige Aussparung (44) aufweist.

5. Antriebseinheit nach einem der Ansprüche 1 bis 4, **dadurch gekennzeichnet, daß** an die untere, offene Stirnseite (41) des Gehäuseteils (16) eine Bodenplatte (42) mit einem Führungselement (43) für das Fördermittel, oder ein Kettenkasten befestigbar ist.

6. Antriebseinheit nach einem der Ansprüche 1 bis 5, **dadurch gekennzeichnet, daß** in die Ausnehmungen (25) eine vormontierbare Baugruppe, bestehend zumindest aus den beiden Lagerplatten (31), dem Antriebsrad (38) sowie dessen Lagerung (34) mit Antriebswelle (37) einführbar ist.

## Claims

1. Drive unit (10) for a continuous means of conveyance in a transfer system, comprising:
- a drive wheel (38) having a drive shaft (36),
- a housing part (16) which has two side walls (17, 18), a front wall (19) with an aperture (21) for the means of conveyance and a rear wall (20), which are connected to one another in one piece and delimit an interior space (33) for holding the drive wheel (38),
the upper end (26) and the lower end (41) of the housing part (16) being of open design and
each side wall (17, 18) having a recess (25) originating from the upper end (26),
- two bearing plates (31), which hold the drive shaft (36) of the drive wheel (38), it being possible for each of the bearing plates (31) to be inserted into the recess (25) in a side wall (17, 18) in each case from the direction of the open, upper end (26) of the housing part (16),
- a final cover (40) which, after it has been removed, permits access to the internal space (33) of the housing part (16),
**characterized in that** the final cover (40) is designed separately from the bearing plates (31), closes the recesses (25) and in this way holds the bearing plates (31) firmly in the recesses (25).

2. Drive unit according to Claim 1, **characterized in that** the recesses (25) and the drive wheel (38) are arranged to be offset towards the rear wall (20).

3. Drive unit according to either of Claims 1 and 2, **characterized in that** the recesses (25) in each case have a groove (30) to hold the bearing plates (31) with a form fit.

4. Drive unit according to one of Claims 1 to 3, **characterized in that** the rear wall (20) has a groove-like cutout (44).

5. Drive unit according to one of Claims 1 to 4, **characterized in that** a base plate (42) having a guide element (43) for the means of conveyance or a chain box can be fixed to the lower, open end (41) of the housing part (16).

6. Drive unit according to one of Claims 1 to 5, **characterized in that** a subassembly that can be preassembled, comprising at least the two bearing plates (31), the drive wheel (38) and its mounting (34) with drive shaft (37), can be inserted into the recesses (25).

## Revendications

1. Unité d'entraînement (10) d'un moyen de transport sans fin d'un système de transfert comprenant :
- une roue d'entraînement (38) avec un arbre d'entraînement (36),
- une partie de boîtier (16) ayant deux parois latérales (17, 18), une paroi avant (19) avec un passage (21) pour le moyen de transport et une paroi arrière (20) reliées solidairement ainsi qu'un volume intérieur (33) pour recevoir la roue d'entraînement (38), la face frontale supérieure (26) et la face frontale inférieure (41) de la partie de boîtier (16) étant ouvertes et chaque paroi latérale (17, 18) comportant une cavité (25) partant de la face frontale supérieure (26),
- deux plaques de palier (31) recevant l'arbre d'entraînement (36) de la roue d'entraînement (38), chacune des plaques de palier (31) s'introduisant dans la cavité (25) de chaque fois une paroi latérale (17, 18) dans la direction du côté frontal supérieur (26) ouvert de la partie de boîtier (16) et
- un couvercle (40) permettant l'accès au volume intérieur (33) de la partie de boîtier (16) après son démontage,
**caractérisée en ce que**
le couvercle (40) est réalisé séparément des plaques de palier (31), il ferme les cavités (25) et maintient ainsi les plaques de palier (31) dans les cavités (25).

2. Unité d'entraînement selon la revendication 1,
**caractérisée en ce que**
les cavités (25) ou la roue d'entraînement (38) sont décalées par rapport à la paroi arrière (20).

3. Unité d'entraînement selon l'une des revendications 1 ou 2,
**caractérisée en ce que**
les cavités (25) ont chaque fois une rainure (30) pour recevoir les plaques de palier (31) par une liaison par la forme.

4. Unité d'entraînement selon l'une des revendications 1 à 3,
**caractérisée en ce que**
la paroi arrière (20) comporte une cavité (44) en forme de rainure.

5. Unité d'entraînement selon l'une des revendications 1 à 4,
**caractérisée en ce que**
la paroi frontale inférieure ouverte (41) de la partie de boîtier (16) comporte une plaque de fond (42) munie d'un élément de guidage (43) pour le moyen de transport ou un caisson à chaîne.

6. Unité d'entraînement selon l'une des revendications 1 à 5,
**caractérisée en ce qu'**
un ensemble pré-assemblé est intégré dans les cavités (25), cet ensemble se composant au moins des deux plaques de palier (31), de la roue d'entraînement (38) et de son palier (34) avec l'arbre d'entraînement (37).
